# EUROPÄISCHE PATENTANMELDUNG

(11) **EP 3 524 375 A1**
(43) Veröffentlichungstag der Anmeldung: **14.08.2019**
(21) Anmeldenummer: 18156319.8
(22) Anmeldetag: 12.02.2018
(51) Int. Cl.: B22F 3/11, C04B 38/00, C04B 38/06, C25B 11/03, C25B 13/04, H01M 8/0232, H01M 8/0236, H01M 8/0243

(54) **VERFAHREN ZUR HERSTELLUNG EINES PORÖSEN FORMKÖRPERS SOWIE PORÖSER FORMKÖRPER**

(71) Anmelder: Verbund Solutions GmbH, 1150 Wien (AT)
(72) Erfinder: Zauner, Rudolf, 2500 Baden (AT); Fink, Martin, 1160 Wien (AT)
(74) Vertreter: Patentanwaltskanzlei Matschnig & Forsthuber OG

(57) **Zusammenfassung**

Ein erfindungsgemäßes Verfahren zur Herstellung eines porösen Formkörpers (100) umfasst zumindest die folgenden Verfahrensschritte:
-A- Bereitstellen eines pulverförmigen Trägermaterials (10), welches zumindest ein Metallpulver und/oder Keramikpulver umfasst;
-B- Bereitstellen eines Spacermaterials (20);
-C- Bereitstellen eines niedrigschmelzenden Bindermaterials (30), dessen Schmelztemperatur (T_{S,30}) unterhalb jener (T_{S,20}) des Spacermaterials (20) ausgewählt wird;
-D- Beschichten des Spacermaterials (20) mit dem Bindermaterial (30);
-E- Mischen des Trägermaterials (10) mit dem beschichteten Spacermaterial (40) zu einer Formmasse (50);
-F- Formgebendes Herstellen eines Grünlings (60) aus der Formmasse (50) bei einer Plastifizierungstemperatur (T_{P,60}) unterhalb der Schmelztemperatur (T_{S,20}) des Spacermaterials (20);
-G- Abkühlen des Grünlings (60);
-H- Entfernen des Bindermaterials (30) des Grünlings (60) bei einer ersten Haltetemperatur (T_{H,70});
-I- Ansintern des entbinderten Grünlings (70) bei einer zweiten Haltetemperatur (T_{H,80});
-J- Entfernen des Spacermaterials (20) aus dem angesinterten Grünling (80) bei einer dritten Haltetemperatur (T_{H,90});
-K- Sintern des Zwischenprodukts (90) bei einer Sintertemperatur (T_{S,100}) zu einem Formkörper (100) mit definierter Porengrößenverteilung entsprechend der Partikelgrößenverteilung des Spacermaterials (20).

## Beschreibung

Die Erfindung betrifft ein Verfahren zur Herstellung eines porösen Formkörpers mit definierter Porengrößenverteilung. Weiters wird im Rahmen der Erfindung auch ein erfindungsgemäß hergestellter Formkörper angegeben.

Die pulvermetallurgische Herstellung von metallischen Produkten aus Pulvern ist seit vielen Jahrzehnten etablierter Stand der Technik. Der wesentliche Vorteil der Pulvermetallurgie gegenüber konventionellen Schmelz-metallurgischen Verfahren besteht darin, dass Teile mit komplizierter Geometrie sowie mit hoher Formgenauigkeit und Oberflächenqualität rasch in hoher Stückzahl sowie mit nahezu 100%-iger Materialausnutzung und daher nachhaltig hergestellt werden können. Pulvermetallurgisch hergestellte Produkte unterscheiden sich meist kaum von jenen, die mit herkömmlichen metallurgischen Verfahren gefertigt sind. Üblicherweise ist die Restporosität von pulvertechnologisch hergestellten Materialien etwas höher, was zu einer etwas niedrigeren Festigkeit und Zähigkeit derartiger Bauteile führen kann, jedoch nicht unbedingt von Nachteil sein muss.

Überdies sind pulvertechnologische Prozesse wie zum Beispiel das Pressen und Sintern, Gießen (englisch: type casting) oder Pulverspritzgießen (englisch: powder injection moulding) hinlänglich bekannt. Diese Prozesse werden beispielsweise zur Herstellung von Komponenten aus Metall- oder Keramikpulvern oder deren Mischungen eingesetzt, insbesondere dann, wenn derartige Komponenten eine komplexe Geometrie aufweisen.

Aus dem Stand der Technik sind mittlerweile zahlreiche Ausführungsbeispiele zum Einsatz von pulvertechnologischen Prozessen bekannt. Beispielsweise ist im Dokument US 2014/0211370 A1 die Herstellung einer Katalysator-Elektrode geoffenbart. Bei deren Herstellung werden unter anderem sogenannte Spacer Coatings eingesetzt, wobei darunter anorganische sowie organische Materialien, Keramik, Epoxy- sowie Polymerverbindungen zu verstehen sind. Diese Spacer Coatings sind allerdings auf der elektrochemisch aktiven Substratschicht der Anode (englisch: anode deposition substrate) angelagert, verbleiben am fertigen Elektroden-Bauteil als isolierende Schicht und dienen dazu, um einen direkten elektrischen Kontakt zwischen der anodenseitigen Substratschicht und der Kathode zu vermeiden. Nachteilig an dieser Ausführung ist zumindest, dass keine Bauteile mit komplexen Geometrien gefertigt werden können. Weiters ist bei der Herstellung derartiger Katalysator-Elektroden eine Einstellung der Porengrößenverteilung innerhalb der Bauteile nicht möglich.

Weiters ist beispielsweise aus dem Dokument US 9,079,136 B2 die Herstellung dünner, poröser Metalllagen bekannt. Dabei wird auch der Einsatz sogenannter Porenbildner (englisch: pore former) - beispielsweise werden oxidierbare Materialien wie Graphit, Koks sowie stärkehaltige Materialien genannt - angeführt. Derartige Porenbildner mit mittleren Korngrößen zwischen 100 nm (Nanometer) und 10 µm (Mikrometer) können bei der Herstellung der dünnen Metalllagen eingesetzt werden, wobei die Porenbildner beim anschließenden Sintern entfernt bzw. verbrannt werden. Nachteilig an diesem Herstellungsverfahren ist zumindest, dass damit nur dünne zweidimensionale Lagen pulvermetallurgisch hergestellt werden können, nicht jedoch dreidimensionale Körper mit komplexer Geometrie.

Die vorliegende Erfindung setzt sich daher zum Ziel, die aus dem Stand der Technik bekannten Nachteile von Verfahren zur Herstellung von porösen Formkörpern zu vermeiden und ein neuartiges Herstellungsverfahren anzugeben, mit dem es möglich ist, die Porosität eines dreidimensionalen Formkörpers einzustellen. Eine weitere Aufgabe der Erfindung besteht darin, mit dem neuartigen Herstellungsverfahren auch Formkörper herstellen zu können, die beispielsweise abschnittsweise oder lagenweise Zonen aufweisen, welche Zonen eine größere Porosität aufweisen als angrenzende Abschnitte oder Lagen desselben Formkörpers. Das erfindungsgemäße Herstellungsverfahren soll außerdem keinen Materialeinschränkungen unterliegen und generell für sinterbare Materialien, also für metallische und/oder keramische Materialien anwendbar sein.

Eine weitere Aufgabe der Erfindung liegt darin, einen verfahrensgemäß hergestellten Formkörper mit definierter Porengrößenverteilung anzugeben, der als dreidimensionaler Bauteil in Brennstoffzellen oder Elektrolyseur-Zellen eingesetzt werden kann.

Diese Aufgaben werden im Rahmen der Erfindung von einem Verfahren zur Herstellung eines porösen Formkörpers mit den Merkmalen von Anspruch 1 gelöst. Weiters werden im Rahmen der Erfindung ein poröser Formkörper mit den Merkmalen von Anspruch 14 sowie eine vorteilhafte Verwendung eines solchen porösen Formkörpers angegeben. Vorteilhafte Ausgestaltungen und Fortbildungen der Erfindung sind in den Unteransprüchen und der Beschreibung dargelegt.

Ein erfindungsgemäßes Verfahren zur Herstellung eines porösen Formkörpers umfasst dabei zumindest die folgenden Verfahrensschritte:
-A- Bereitstellen eines pulverförmigen Trägermaterials, welches zumindest ein Metallpulver und/oder zumindest ein Keramikpulver oder deren Mischungen umfasst;
-B- Bereitstellen eines Spacermaterials mit einer Schmelztemperatur des Spacermaterials;
-C- Bereitstellen eines niedrigschmelzenden Bindermaterials, wobei die Schmelztemperatur des Bindermaterials unterhalb der Schmelztemperatur des Spacermaterials ausgewählt wird;
-D- Beschichten des Spacermaterials mit dem niedrigschmelzenden Bindermaterial unter Bildung eines beschichteten Spacermaterials;
-E- Mischen des pulverförmigen Trägermaterials mit dem beschichteten Spacermaterial unter Bildung einer Formmasse in einem Mischaggregat bei einer Mischungstemperatur;
-F- Formgebendes Herstellen eines Grünlings aus der Formmasse bei einer Plastifizierungstemperatur, die unterhalb der Schmelztemperatur des Spacermaterials gewählt wird;
-G- Abkühlen des Grünlings auf Umgebungstemperatur;
-H- Entfernen des Bindermaterials des Grünlings bei einer ersten Haltetemperatur, wobei die erste Haltetemperatur unterhalb der Schmelztemperatur des Spacermaterials sowie oberhalb der Schmelztemperatur des Bindermaterials ausgewählt wird, wobei ein Grünling mit zumindest teilweise entferntem Bindermaterial erhalten wird;
-I- Ansintern des zumindest teilweise entbinderten Grünlings bei einer zweiten Haltetemperatur, wobei die zweite Haltetemperatur oberhalb der Schmelztemperatur des Spacermaterials sowie oberhalb der ersten Haltetemperatur ausgewählt wird, wobei ein angesinterter Grünling erhalten wird;
-J- Entfernen des Spacermaterials aus dem angesinterten Grünling bei einer dritten Haltetemperatur, wobei die dritte Haltetemperatur oberhalb der zweiten Haltetemperatur ausgewählt wird, wobei ein Zwischenprodukt mit zumindest teilweise entferntem Spacermaterial erhalten wird;
-K- Sintern des Zwischenprodukts bei einer Sintertemperatur, welche oberhalb der dritten Haltetemperatur ausgewählt ist, zu einem porösen Formkörper mit definierter Porengrößenverteilung, welche der Partikelgrößenverteilung des Spacermaterials entspricht.

Besonders vorteilhaft können mit dem erfindungsgemäßen Verfahren sogenannte poröse "Netshape"-Formkörper hergestellt werden. Unter dem Begriff "Netshaping" versteht der Fachmann in Zusammenhang mit Formkörpern, dass diese ohne Materialverlust kostengünstig sowie mit definierter Porosität hergestellt werden können. Weiters ist von Vorteil bei "Netshape"-Formkörpern, dass auch bei komplexen dreidimensionalen Geometrien der Formkörper keine Nachbearbeitung der Konturen des Formkörpers beispielsweise mittels Fräsen, Drehen, Bohren oder Schleifen notwendig ist.

Vorteilhaft können beim erfindungsgemäßen Herstellungsverfahren gemäß Verfahrensschritt -A- unterschiedliche pulverförmige Trägermaterialien, welche zumindest ein Metallpulver und/oder zumindest ein Keramikpulver oder deren Mischungen umfassen, eingesetzt werden.

Im Unterschied zu bisher bekannten pulvertechnologischen Verfahren, bei denen die Einstellung der Porosität des herzustellenden Materials meist durch die Sinterbedingungen (Temperatur, Zeit, Atmosphäre) erfolgt und die Binderkomponente beim Formgebungsschritt vollständig (z. B. Pulverspritzgießen) oder gar nicht (z. B. Pressen bei Raumtemperatur) geschmolzen wird, wird beim erfindungsgemäßen Verfahren gemäß Verfahrensschritt -C- vorteilhaft ein niedrigschmelzendes Bindermaterial zur Beschichtung des Spacermaterials bereitgestellt, wobei die Schmelztemperatur des Bindermaterials unterhalb der Schmelztemperatur des Spacermaterials ausgewählt wird, sodass die Partikelform des Spacermaterials erhalten bleibt und somit die Porengrößenverteilung über die Partikelgrößenverteilung des Spacermaterials eingestellt werden kann.

Gemäß Verfahrensschritt -D- erfolgt die Beschichtung des Spacermaterials mit dem niedrigschmelzenden Bindermaterial mit möglichst gleichmäßiger Schichtdicke. Beispielsweise werden zum Beschichten (englisch: Coating) zum Beispiel Sprühcoatingverfahren verwendet. Beim Sprüh-Coating in der Wirbelschicht wird das Beschichtungsmaterial auf die Oberfläche der zu beschichtenden Partikel aufgetragen. Je nach Anforderung lassen sich die Produkteigenschaften wie zum Beispiel die Schichtdicke gezielt beeinflussen und optimieren. Bei diesem Verfahren werden die zu beschichtenden Partikel in der Wirbelschicht bewegt und dabei mit dem geschmolzenen Beschichtungsmaterial besprüht. Das Auftragen der Beschichtung erfolgt zweckmäßig bei Temperaturen unterhalb der Schmelztemperatur des Spacermaterials.

Das beschichtete Spacermaterial wird gemäß Verfahrensschritt -E- mit dem pulverförmigen Trägermaterial bei vergleichsweise niedriger Mischungstemperatur, bevorzugt bei einer Mischungstemperatur unterhalb des Schmelzpunktes des Bindermaterials, in einem Mischaggregat wie beispielsweise einer Mühle oder einem Mischer homogen vermischt. In dieser Ausführungsvariante, bei der die Mischungstemperatur unterhalb der Schmelztemperatur des Bindermaterials gehalten wird, bleibt vorteilhaft die Form der Partikel des beschichteten Spacermaterials erhalten, die die spätere Porengrößenverteilung ergibt. Damit wird der erfindungsgemäße Effekt der Einstellung der Porengrößenverteilung des porösen Formkörpers durch die Partikelgrößenverteilung des Spacermaterials ermöglicht.

Im Falle von Formkörpern mit komplexer Geometrie, sogenannten komplexen "Netshape"-Formkörpern, mit zum Beispiel Hinterschneidungen, Wanddickensprüngen oder starken Abweichungen von planaren Formen kann in einer weiteren Ausführungsvariante die Weiterformung der Formmasse zu einem formbaren Einsatzmaterial erforderlich sein, um dieses Einsatzmaterial in einem Spritzguss- oder Gussverfahren weiter zu einem Grünling verarbeiten zu können. Die Mischungstemperatur für das Weiterformen der Formmasse zu einem formbaren Einsatzmaterial kann dazu zweckmäßig oberhalb der Schmelztemperatur des Bindermaterials sowie unterhalb der Schmelztemperatur des Spacermaterials ausgewählt werden. Dieser Verfahrensschritt kann wahlweise im selben Mischaggregat wie das Anmischen der Formmasse erfolgen. Wobei gegebenenfalls eine gesteuerte Temperaturführung erforderlich ist, um zuerst bei einer niedrigen Mischungstemperatur unterhalb der Schmelztemperatur des Bindermaterials die Formmasse herzustellen, die dann bei einer erhöhten Mischungstemperatur unter Mischen, Rühren und/oder Kneten zu einem formbaren Einsatzmaterial erwärmt wird, das dann ausreichende plastische Eigenschaften für den Einsatz beispielsweise in einem Spritzgussverfahren hat. Alternativ dazu kann dieser Verfahrensschritt der Herstellung eines formbaren Einsatzmaterials als Vorlage für ein Guss- oder Spritzgussverfahren auch in einem eigenen, zusätzlichen Formgebungsaggregat durchgeführt werden.

Gemäß Verfahrensschritt -F- erfolgt anschließend das formgebende Herstellen eines Grünlings aus der Formmasse bei einer Plastifizierungstemperatur, die unterhalb der Schmelztemperatur des Spacermaterials gewählt wird. Wenn beispielsweise als Spacermaterial ein Kunststoffmaterial mit einer Schmelztemperatur von rund 220°C eingesetzt wird, so bietet es sich in einem solchen Fall an, wenn für das formgebende Herstellen eines Grünlings aus der Formmasse eine Plastifizierungstemperatur von 100°C bis 200°C, bevorzugt von 130°C bis 190°C, ausgewählt wird.

In diesem Fall kann aus der erwärmten Formmasse beispielsweise mittels eines Pressverfahrens, Gussverfahrens oder Spritzgussverfahrens ein Grünling geformt werden mit "Netshape"-Eigenschaften, also mit einer komplexen dreidimensionalen Geometrie, die exakt den vorgegebenen Konturen des Vorlagekörpers entspricht und die keine weitere Nachbearbeitung benötigt.

Im nachfolgenden Verfahrensschritt -G- wird der erhaltene Grünling nach dem Formgebungsschritt abgekühlt. Die Abkühlung erfolgt dabei zweckmäßig auf Umgebungstemperatur bzw. auf Raumtemperatur bzw. Umgebungstemperatur.

Anschließend wird der kalte bzw. abgekühlte Grünling einem mehrstufigen Wärmebehandlungsverfahren unterzogen. Zum Aufwärmen wird der abgekühlte Grünling in einen Entbinderungsofen zum Entfernen des Bindermaterials - dem sogenannten "Entbindern" - chargiert. Dies ist in Verfahrensschritt -H- festgehalten. Das Entfernen des Bindermaterials des Grünlings erfolgt bei einer ersten Haltetemperatur unterhalb der Schmelztemperatur des Spacermaterials sowie oberhalb der Schmelztemperatur des Bindermaterials.

Optional kann erforderlichenfalls vor diesem thermischen Entbinderungsschritt zusätzlich noch eine chemische (Lösemittel-) Entbinderung durchgeführt werden. Auf diesen optionalen Verfahrensschritt -H'- wird im Folgenden noch detailliert eingegangen.

Die weiteren Verfahrensschritte -I- bis -K-, welche das Ansintern des Grünlings bei einer zweiten Haltetemperatur, das Entfernen des Spacermaterials bei einer dritten Haltetemperatur sowie das Sintern des so erhaltenen Zwischenprodukt zu einem fertig gesinterten porösen Formkörper mit definierter Porengrößenverteilung umfassen, sind ebenfalls Teil des mehrstufigen Wärmebehandlungsverfahrens. Die hintereinander folgenden Wärmebehandlungsschritte werden bei steigenden Temperaturniveaus der aufeinanderfolgenden Haltetemperaturen durchgeführt. Die gewählte Sintertemperatur, welche jedenfalls oberhalb der Haltetemperaturen ausgewählt wird, ergibt sich maßgeblich abhängig vom gewählten Ausgangsprodukt des pulverförmigen Trägermaterials.

Optional kann erforderlichenfalls vor dem Verfahrensschritt -J- des thermischen Entfernens des Spacermaterials zusätzlich noch eine chemische (Lösemittel-) Entfernung des Spacermaterials durchgeführt werden. Auf diesen optionalen Verfahrensschritt -J'- wird ebenso im Folgenden noch detailliert eingegangen werden.

Besonders vorteilhaft wird damit ein Herstellungsverfahren angegeben, mit dem es möglich ist, einen porösen Formkörper mit definierter Porengrößenverteilung, welche der Partikelgrößenverteilung des Spacermaterials entspricht, herzustellen.

In einer vorteilhaften Weiterbildung des erfindungsgemäßen Verfahrens kann nach dem Abkühlen des Grünlings (gemäß Verfahrensschritt -G-) und vor dem thermischen Entfernen des Bindermaterials (gemäß Verfahrensschritt -H-) in einem weiteren Verfahrensschritt (Verfahrensschritt -H'-) ein chemisches Entfernen des Bindermaterials unter Einsatz zumindest eines Lösungsmittels oder Lösungsmittelgemisches erfolgen, wobei der Grünling bei einer Lösungsmitteltemperatur von 10°C bis 80°C, vorzugsweise von 20° bis 70°, besonders bevorzugt von 25°C bis 60°C, in einem Lösungsmittelbad eingetaucht und anschließend getrocknet wird.

Zur sequentiellen Entfernung der Binderkomponenten kann der Grünling erforderlichenfalls auch einem mehrstufigen Entbinderungsprozess unterzogen werden. Dabei ist zu beachten, dass durch die Entfernung der Komponenten die Integrität bzw. Formstabilität des Formkörpers nicht negativ beeinflusst wird. In einem ersten chemischen Entbinderungsschritt kann bei niedriger Temperatur mit Hilfe eines Lösungsmittels oder Lösungsmittelgemisches, beispielsweise Hexan oder Heptan bei wachsbasierten Bindersystemen oder Wasser bei glykolbasierten Systemen, das niedrigschmelzende Bindermaterial entfernt werden. Die Entbinderung dauert beispielsweise bei einem Pulver mit einer mittleren Partikelgröße von 15 Mikrometer rund sechs Stunden bei Raumtemperatur. Die chemische Lösemittelentbinderung erfolgt bevorzugt bei Raumtemperatur, da bei erhöhter Temperatur die Formstabilität des herzustellenden Formkörpers aufgrund des zu raschen Entbinderungsvorganges leiden könnte.

Die chemische Entfernung der Binderkomponente führt zu einem Formkörper mit initialer Porosität, die durch das nachfolgende thermische Entbindern bei einer Temperatur oberhalb der Schmelztemperatur des Bindermaterials sowie unterhalb der Schmelztemperatur des Spacermaterials gewählt wird. Je nach Auswahl des Trägermaterials kann während der thermischen Entfernung des Bindermaterials eine reduzierende (z. B. durch Zufuhr von Wasserstoff), neutrale (z. B. durch Zufuhr von Stickstoff), oxidierende (z. B. durch Zufuhr von Luft) oder eine Vakuum-Atmosphäre (durch Evakuierung des Entbinderungsapparates, beispielsweise eines Entbinderungsofens) eingestellt werden.

Beispielhaft sind in den folgenden Abbildungen typische Temperaturverläufe zur Wärmebehandlung von Grünlingen dargestellt. Der weitere Temperaturverlauf der Wärmebehandlung unter einer gewählten Atmosphäre - die sich von der Atmosphäre für den ersten Entbinderungsschritt unterscheiden kann - ist von einer langsamen Temperaturerhöhung unter Einhaltung von Haltetemperaturen unterhalb und oberhalb des Schmelzpunktes des eingesetzten Spacermaterials und unter Berücksichtigung der Sinteraktivität des verwendeten pulverförmigen Trägermaterials zu wählen. Die Haltetemperaturen und Haltezeiten sind wichtig, um den zu entfernenden Komponenten genug Zeit zu geben, entfernt zu werden und so die Integrität und Formstabilität des zu entbindernden Körpers zu bewahren. Darüber hinaus sind für die Einstellung der gewünschten Porengrößenverteilung die Prozessschritte der Wärmebehandlung sehr wichtig, weshalb die Haltetemperaturen und Temperaturrampen sehr gezielt und reproduzierbar eingestellt werden müssen. Das Fertigsintern des porösen Formkörpers gemäß Verfahrensschritt -K- kann wiederum unter der gleichen oder einer anderen Atmosphäre erfolgen.

Für das optionale chemische Entbindern kommen als Lösungsmittel für das Herauslösen des niedrigschmelzenden Bindermaterials - abhängig vom Bindermaterial - beispielsweise organische Lösungsmittel wie Heptan in Frage. Dabei wird beispielsweise der Grünling vorzugsweise bei Temperaturen zwischen 25°C und 60°C für eine Dauer von ca. 4 bis 8 Stunden in einem Lösungsmittelbad eingetauscht und anschließend beispielhaft bei Temperaturen zwischen 25°C und 60°C während einer Dauer von 0,5 bis 2 Stunden getrocknet, um Lösungsmittelreste zu entfernen.

Je nach Aufgabenstellung, Zusammensetzung und Größe der herzustellenden Formkörper können die Zeitspannen für das chemische Herauslösen des Bindermaterials von diesen exemplarisch genannten Zeitspannen auch abweisen.

In einer weiteren vorteilhaften Weiterbildung des erfindungsgemäßen Verfahrens kann nach dem Ansintern des bereits zuvor entbinderten Grünlings (gemäß Verfahrensschritt -I-) und vor dem thermischen Entfernen des Spacermaterials (gemäß Verfahrensschritt -J-) in einem weiteren Verfahrensschritt (Verfahrensschritt -J'-) ein chemisches Entfernen des Spacermaterials unter Einsatz zumindest eines Lösungsmittels oder Lösungsmittelgemisches erfolgen, wobei der angesinterte Grünling bei einer Lösungsmitteltemperatur von 10°C bis 80°C, vorzugsweise von 20° bis 70°, besonders bevorzugt von 25°C bis 60°C, zumindest eine Stunde lang in einem Lösungsmittelbad eingetaucht und anschließend getrocknet wird.

Beispielsweise kommen für den Fall, dass als Spacermaterial ein Kunststoff oder ein Kunststoffhaltiges Gemisch eingesetzt wird, organische Lösungsmittel wie Heptan als Lösungsmittel für das Herauslösen des Spacermaterials in Frage. Im Falle von wasserlöslichem Spacermaterial kann beispielsweise Wasser als Lösungsmittel eingesetzt werden. Dabei wird der bereits zuvor entbinderte Grünling bei Temperaturen beispielsweise von 25°C bis 60°C während einer Dauer von etwa 4 bis 8 Stunden in einem entsprechenden Lösungsmittelbad eingetaucht und anschließend bei Temperaturen beispielsweise von 25°C bis 60°C während einer Trocknungsdauer von 0,5 bis 2 Stunden getrocknet.

Für diejenigen Ausführungsfälle, bei den als Spacermaterial nicht ein Kunststoff oder Kunststoffgemisch, sondern beispielsweise ein oxidkeramisches Pulver mit einer deutlich höheren Schmelztemperatur als Kunststoff eingesetzt wird, gilt:
Für Trägermaterialen mit niedriger Sinteraktivität, die hohe Sintertemperaturen, beispielsweise Sintertemperaturen über 1000°C benötigen, kann als Spacermaterial zum Beispiel ein oxidkeramisches Pulver wie Aluminiumoxid Al₂O₃ oder Siliziumoxid SiO₂ oder Zirkonoxid ZrO₂ verwendet werden. Die Verfahrensführung kann in so einem Fall bis zum Verfahrensschritt -I- gleich wie beim Einsatz von Kunststoff als Spacermaterial durchgeführt werden. Danach - also nach dem Verfahrensschritt -I- und dem Ansintern des bereits zumindest teilweise entbinderten Grünlings - erfolgt in diesem Fall anschließend vorteilhafter Weise eine Abkühlung des angesinterten Grünlings auf Umgebungstemperatur bzw. auf Raumtemperatur. Der abgekühlte, angesinterte Grünling wird anschließend in ein Lösungsmittelbad eingetaucht, welches als Lösungsmittel beispielsweise eine stark alkalische Lösung, etwa Natronlauge oder Kalilauge oder Mischungen davon, aufweist. Dabei findet ein Herauslösen des Spacermaterials - beispielsweise von Oxidkeramik - statt. Der Grünling befindet sich in dem Lösungsmittelbad, welches beispielweise Natronlauge oder Kalilauge oder Mischungen davon enthält, zweckmäßigerweise etwa für eine Dauer von 3 bis 8 Stunden. Je nach Aufgabenstellung, Zusammensetzung und Größe der herzustellenden Formkörper können die Zeitspannen für das chemische Herauslösen des Spacermaterials von diesen exemplarisch genannten Zeitspannen auch abweisen. Danach folgt Verfahrensschritt -J-.

In einer besonders vorteilhaften Ausführungsvariante der Erfindung kann bei einem Herstellungsverfahren das pulverförmige Trägermaterial Partikel mit einer Korngröße von 0,1 µm bis 300 µm, bevorzugt von 1 µm bis 150 µm, besonders bevorzugt von 5 µm bis 50 µm, enthalten, wobei die Partikel in einer definierten Korngrößenverteilung vorliegen.

Die Definition und Charakterisierung der Korngrößenverteilung bzw. Partikelgrößenverteilung kann dabei zweckmäßig durch die Angabe von charakteristischen Partikelgrößen wie D₁₀, D₅₀ und D₉₀ oder durch die Angabe von D₅₀ und die Standardabweichung der Partikelgrößenverteilung erfolgen. Der Dso-Wert bedeutet dabei, dass 50% der Partikel eines Haufwerks kleiner sind als der angegebene Wert, der im Falle eines kugelförmigen Partikels seinem Durchmesser entspricht und im Falle von Partikeln, die von der Kugelform abweichen, als Äquivalenzdurchmesser umzurechnen ist. Demnach bedeutet als der D₁₀-Wert der Partikelgrößenverteilung eines Pulvers, dass 10% der Partikel des Pulvers kleiner sind als der angegebene D₁₀-Wert.

Darüber hinaus kann das pulverförmige Trägermaterial auch mit einer der Gauß'schen Verteilung abweichenden Partikelgrößenverteilung, beispielsweise mit einer bimodalen oder komplexen Partikelgrößenverteilung, verwendet werden.

Als pulverförmiges Trägermaterial können beispielsweise - unter anderem - die folgenden metallischen und/ oder keramischen Materialien oder Mischungen daraus eingesetzt werden: Aluminiumoxid Al₂O₃; Aluminiumsilikat Al₂O₃-SiO₂; Aluminiumnitrid AlN ; Bronze Cu-SN ; Hartmetalle und deren Mischungen, beispielsweise Wolramkarbid-Kobalt-Hartmetall WC-Co ; Kupfer Cu; Ferritische Materialien Fe₃O₄; Eisen Fe sowie beispielsweise Eisenverbindungen Fe-Si, Fe-P, Fe-Ni-Co ; Molybdän Mo ; Molybdän-Kupfer Mo-Cu ; Nickel Ni; Nickel-Eisen Ni-Fe; Nickelbasislegierungen Ni-Cr-Mo, Siliziumoxid SiO₂; Siliziumkarbid SiC; Siliziumnitrid Si₃N₄; Spinell MgO-Al₂O₃; Stahl jeder Gefügetyps und jeder Legierungszusammensetzung wie beispielsweise Fe-C , Fe-C-Cu , Fe-Ni-C, Fe-Cr-Ni (rostfrei), Fe-Co-Cr-W-V-C (Werkzeugstahl), Superlegierungen Ni-Co-Cr-Ti-Al-Mo ; Titan Ti und dessen Legierungen Ti-Al-V; Wolfram W; Wolfram-Kupfer W-Cu ; Schwermetall-Legierungen W-Ni-Fe, W-Ni-Cu ; Yttrium Y₂O₃; Zirkon ZrO₂; Zirkonlegierungen wie beispielsweise ZrO₂-MgO, ZrO₂-Y₂O₃, ZrO₂-CaO; sowie Spezialpulver auf Basis von Seltenen Erden und deren Oxiden.

Als Herstellmethoden für derartige pulverförmige Trägermaterialien kommen beispielsweise Verfahren umfassend die Gasverdüsung, Wasserverdüsung, oxidische Reduktion, Plasmaatomisierung, Fällung, CVP (chemical vapour deposition), PVD (physical vapour deposition), Mahlung und/oder die chemische Herstellung über eine oder mehrere chemische Reaktionen in Frage.

Die Form des pulverförmigen Trägermaterials kann dabei auch die Packungsdichte sowie den Bereich der einstellbaren Porosität des Ausgangsmaterials bzw. des herzustellenden porösen Formkörpers beeinflussen. Bei etwa kugelförmigen Pulverpartikeln des pulverförmigen Trägermaterials mit sehr enger Korngrößenverteilung können beispielsweise Packungsdichten von bis zu 64% erreicht werden. Bei kurzen zylindrischen Partikeln können beispielhaft Packungsdichten des pulverförmigen Trägermaterials von bis zu 68% erreicht werden.

Bei länglichen zylindrischen Partikeln (mit einem Verhältnis von Länge L zu Durchmesser d von L/d=10:1) werden dagegen Packungsdichten von nur rund 50% erreicht.

In einer weiteren vorteilhaften Ausführungsform der Erfindung können bei einem Herstellungsverfahren Spacermaterial eingesetzt werden, welches einen pulverförmigen Kunststoff oder ein Kunststoffgemisch enthält, wobei die Schmelztemperatur des Spacermaterials von 100°C bis 350°C, bevorzugt von 150°C bis 250°C, beträgt.

Als Spacermaterialien eignen sich beispielsweise Pulver mit niedriger Sinteraktivierung und niedriger Sintertemperatur. Zum Beispiel können Polyolefine wie Polypropylen PP (mit einer Schmelztemperatur von rund 150°C) oder Polyethylen PE (Schmelztemperatur von rund 170°C) oder Mischungen daraus als Spacermaterialien im Rahmen des erfindungsgemäßen Herstellungsverfahrens eingesetzt werden. Aber auch andere Kunststoffe wie Polystyrol (mit einer Schmelztemperatur von ca. 180°C) kommen in Frage. Für pulverförmige Trägermaterialien mit höherer Sintertemperatur können als geeignete Spacermaterialien beispielsweise Kunststoffe mit einem höheren Schmelzpunkt gewählt werden, wie z. B. Teflon® PTFE (mit einer Schmelztemperatur von ca. 325°C) oder Polyamide (mit Schmelztemperaturen größer als 200°C). Bei noch höher geforderten Schmelztemperaturen ist es auch denkbar, Stoffe wie Polyvinylbutrial oder Methylzellulose als Spacermaterial einzusetzen. Derartige Spacermaterialien haben den Vorteil, glasartig zu werden, bevor deren Viskosität beim Erwärmen signifikant absinkt. Zusammenfassend ist der Schmelzpunkt bzw. die Schmelztemperatur des ausgewählten Spacermaterials für die weitere Temperaturführung beim Entbindern und Vorsintern entscheidend.

In einer weiteren bevorzugten Ausführungsvariante kann bei einem Verfahren gemäß der Erfindung das Spacermaterial eine pulverförmige Oxidkeramik oder ein Oxidkeramikgemisch enthalten.

Der Einsatz eines derartigen Spacermaterials bietet den Vorteil, dass damit auch Trägermaterialen mit niedriger Sinteraktivität, die hohe Sintertemperaturen, beispielsweise Sintertemperaturen über 1000°C benötigen, mit dem erfindungsgemäßen Herstellungsverfahren bearbeitet werden können. Als Spacermaterial können zum Beispiel oxidkeramische Pulver wie Aluminiumoxid Al₂O₃, Siliziumoxid SiO₂ oder Zirkonoxid ZrO₂ verwendet werden. Abhängig von der Materialwahl des gewählten Spacermaterials bzw. des eingesetzten Trägermaterials kann die Schmelztemperatur des Spacermaterials vorteilhaft auch oberhalb der Sintertemperatur des Trägermaterials liegen. Das Entfernen des Spacermaterials erfolgt in so einem Fall gemäß Verfahrensschritt -J'- durch chemisches Entfernen des Spacermaterials unter Einsatz zumindest eines Lösungsmittels oder Lösungsmittelgemisches.

Zweckmäßig kann bei einem Herstellungsverfahren gemäß der Erfindung ein Bindermaterial eingesetzt werden, welches Bindermaterial ein niedrigschmelzendes Wachs und/oder eine niedrigschmelzende organische Verbindung oder Mischungen daraus enthält, wobei die Schmelztemperatur des Bindermaterials von 30°C bis 100°C, bevorzugt von 50°C bis 80°C, beträgt.

Die niedrigschmelzende Binderkomponente kann beispielhaft ein Paraffinwachs mit einer Schmelztemperatur zwischen 50° und 60°C sein. Ebenso können beispielsweise CarnaubaWachs (mit einer Schmelztemperatur von ca. 80°C) oder Stearinsäure (mit einer Schmelztemperatur von ca. 75°C) oder andere niedrigschmelzende und nicht toxische organische Verbindungen wie Glykole, oder deren Mischungen, als niedrigschmelzende Binderkomponenten eingesetzt werden. Vorteilhaft können derartige Binderkomponenten thermisch und/oder chemisch in späteren Prozessschritten wieder entfernt werden.

Vorteilhaft kann bei einem erfindungsgemäßen Herstellungsverfahren das beschichtete Spacermaterial einen Volumenanteil des Spacermaterials von 70% bis 95% sowie einen Volumenanteil des Bindermaterials von 5% bis 30% beinhalten. Die Zusammensetzung des beschichteten Spacermaterials kann beispielhaft: 70% Polypropylen, 20% Paraffinwachs, 10% Stearinsäure sein.

Die Beschichtung des Spacermaterials mit dem niedrigschmelzenden Bindermaterials als Coating-Material erfolgt mit möglichst gleichmäßiger Schichtdicke der Spacer-Kernpartikel zu einem beschichteten Spacermaterial. Für das Beschichten werden zweckmäßig Mischaggregate wie Wirbelschicht-Sprühcoater verwendet. Die Beschichtung sollte dabei bei Temperaturen unterhalb der Schmelztemperatur des niedrigschmelzenden Bindermaterials erfolgen.

Die Partikelgrößenverteilung des Spacermaterials bestimmt die einzustellende Porositätsverteilung und sollte vorzugsweise im gleichen oder ähnlichen Größenbereich liegen wie jene des pulverförmigen Trägermaterials, um eine möglichst homogene Durchmischung mit ähnlichen Oberflächenverhältnissen zu gewährleiten. Zusätzlich kann durch geeignete Wahl von Trägermaterial und Spacermaterial mit gleicher oder ähnlicher Partikelgrößenverteilung eine ungewünschte Agglomeration von Trägermaterial und beschichtetem Spacermaterial minimiert werden.

Besonders vorteilhaft ist es, wenn bei einem erfindungsgemäßen Herstellungsverfahren die Mischungstemperatur für das Mischen des pulverförmigen Trägermaterials mit dem beschichteten Spacermaterial zu einer Formmasse unterhalb der Schmelztemperatur des Bindermaterials ausgewählt wird.

Dabei ist darauf zu achten, dass es beim Mischen des pulverförmigen Trägermaterials mit dem beschichteten Spacermaterial zu einer Formmasse zu keiner ungewollten Segregation, das heißt zu keinen lokalen Konzentrationsunterschieden in der Formmasse kommt, um eine möglichst homogene Mischung der Formmasse zu erhalten. Diese Art der Vormischung eignet sich beispielsweise für uniaxiale Press- und Sinterverfahren zur Herstellung bzw. Formgebung von Grünlingen mit einfacher Geometrie ebenso wie von Grünlingen für "Netshape"-Formkörper mit komplexer Geometrie. Im Falle eines Pressverfahrens kann das Pressen entweder bei Raumtemperatur oder bei einer Presstemperatur unterhalb der Schmelztemperatur des Spacermaterials erfolgen.

Wie eingangs bereits erwähnt wird die Mischungstemperatur zur Bildung der Formmasse deshalb unterhalb der Schmelztemperatur des Bindermaterials gehalten, damit die Form der Spacerpartikel erhalten bleibt, da diese die spätere Porengrößenverteilung des herzustellenden porösen Formkörpers festlegen.

In einer weiteren vorteilhaften Ausführungsvariante der Erfindung kann bei einem Verfahren die Mischungstemperatur für das Weiterformen der Formmasse zu einem formbaren Einsatzmaterial oberhalb der Schmelztemperatur des Bindermaterials sowie unterhalb der Schmelztemperatur des Spacermaterials ausgewählt werden.

Wie eingangs bereits erwähnt kann es im Falle der Herstellung von Formkörpern mit komplexer Geometrie, sogenannten komplexen "Netshape"-Formkörpern, erforderlich sein, dass die gemischte Formmasse zu einem formbaren Einsatzmaterial weiterverarbeitet werden muss, damit dieses Einsatzmaterial in einem Spritzguss- oder Gussverfahren weiter zu einem Grünling verarbeitet werden kann. Die Mischungstemperatur für das Weiterformen der Formmasse zu einem formbaren Einsatzmaterial kann dazu zweckmäßig oberhalb der Schmelztemperatur des Bindermaterials sowie unterhalb der Schmelztemperatur des Spacermaterials ausgewählt werden. Dieser Verfahrensschritt kann wahlweise im selben Mischaggregat wie das Anmischen der Formmasse erfolgen. Alternativ dazu kann dieser Verfahrensschritt der Herstellung eines formbaren Einsatzmaterials als Vorlage für ein Guss- oder Spritzgussverfahren auch in einem eigenen, zusätzlichen Formgebungsaggregat durchgeführt werden.

In einer bevorzugten Verfahrensvariante der Erfindung kann das formgebende Herstellen eines Grünlings aus der Formmasse mit einem Gussverfahren, vorzugsweise mit einem Spritzgussverfahren, besonders bevorzugt mit einem Mehrkomponenten-Spritzgussverfahren, erfolgen.

Der Einsatz eines Gussverfahrens bietet insbesondere bei der Herstellung von porösen "Netshape"-Formkörpern, die besonders präzise komplexe dreidimensionale Geometrien aufweisen, Vorteile.

Beispielsweise wird bei einem Spacermaterial aus Kunststoff mit einer Schmelztemperatur beispielsweise von 200°C die Formmasse nach dem Mischen in einem Plastifizieraggregat wie in einem Extruder oder einem Kneter bei einer Temperatur beispielshaft von 100°C für 10 bis 30 Minuten zu einem sogenannten formbaren Einsatzmaterial erwärmt bzw. weiterverarbeitet. Das formbare Einsatzmaterial entspricht der Formmasse. Optional können Zusatzstoffe, die oberflächenaktive Substanzen wie Phthalate (beispielsweise Dimethylphthalat), Acrylate (beispielsweise Ammoniumpolyacrylat) oder Olefin-Sulfonate enthalten, zugesetzt werden.

Typische Spritzgusstemperaturen können je nach Zusammensetzung der Formmasse zwischen 130° und 190°C, typischerweise bei 150°C liegen. Der Einspritzdruck beim Spritzgussverfahren kann im Bereich zwischen 1,5 und 60 MPa, typischerweise bei 30 MPa, betragen. Die Werkzeugtemperatur der Spritzgussform liegt beispielsweise zwischen der Raumtemperatur und 70°C, typischerweise jedoch bei Raumtemperatur. Je nach Zusammensetzung und Beschaffenheit des eingesetzten pulverförmigen Trägermaterials sind die produktberührten Teile der Extrusions- und Plastifiziereinheit der Spritzgussvorrichtung sowie das Spritzgusswerkzeug zweckmäßig mit verschleißfester Beschichtung ausgeführt. Bei kleinen Grünlingen ist es üblich, Mehrfachwerkzeuge zu verwenden, d. h. bei einem Spritzgussvorgang werden gleich mehrere gleiche Grünlinge hergestellt, wodurch die Produktivität und Effizienz des Spritzgussverfahrens erheblich gesteigert werden kann.

Durch entsprechende geometrische Ausführung des Spritzgusswerkzeuges in einer Art und Weise, sodass die Kräfte bei der Zuführung und Verteilung der Formmasse in der Kavität der Spritzgussvorrichtung zu einer gewollten Anreicherung oder umgekehrt zu einer definierten Ausdünnung des beschichteten Spacermaterials führen, können im Grünling bzw. Spritzling lokal unterschiedliche Porositäten bzw. Porengrade erzielt werden.

Durch den Einsatz einer Spritzgussvorrichtung mit mehreren solcher Plastifiziereinheiten, die mit jeweils unterschiedlichen Einsatzmaterialien mit jeweils unterschiedlichem Anteil und/oder mit unterschiedlicher Zusammensetzung an Porenbildenden beschichteten Spacermaterialien befüllt sind, lassen sich durch dosiertes, sequenzielles Einspritzen Grünlinge bzw. Spritzlinge mit abschnittsweisen oder schichtweisen Zonen mit größerer oder mit geringerer Porosität oder mit lokal unterschiedlicher Porengrößenverteilung herstellen, wie diese zum Beispiel vorteilhaft als poröse Formkörper für Gas Diffusion Layers verwendet werden.

In einer weiteren vorteilhaften Ausführungsvariante der Erfindung kann bei einem Verfahren für das Mischen des pulverförmigen Trägermaterials mit dem beschichteten Spacermaterial ein homogen mischendes Mischaggregat ausgewählt werden, um eine homogene Formmasse zur Herstellung eines Grünlings mit einer homogenen Porengrößenverteilung zu erhalten.

Als homogen mischendes Mischaggregat können beispielsweise eine Mühle oder Mischer wie Extruder oder Batchkneter eingesetzt werden, welche je nach Aufgabenstellung beispielsweise kontinuierlich oder semi-kontinuierlich betrieben werden.

In einer alternativen vorteilhaften Ausführungsvariante der Erfindung kann bei einem Verfahren für das Mischen des pulverförmigen Trägermaterials mit dem beschichteten Spacermaterial ein separierend wirkendes Trennaggregat ausgewählt werden, um eine inhomogene Formmasse zur Herstellung eines Grünlings mit einer lokal unterschiedlichen Porengrößenverteilung zu erhalten.

Als separierend wirkendes Mischaggregat können beispielsweise ein Separator, Zentrifugalmischer, Zyklon oder eine Schleudergussanlage eingesetzt werden. Als Alternative oder als Ergänzung zu einem homogen mischenden Mischaggregat oder Formgebungsaggregat führt der Einsatz eines solchen separierend wirkenden Mischaggregats zu einer gewollten Segregation zwischen dem pulverförmigen Trägermaterial und dem beschichteten Spacermaterial, indem zum Beispiel Dichteunterschiede zwischen Trägermaterial und Spacermaterial ausgenützt werden, um in weiterer Folge zu einer gradierten Porengrößenverteilung zu führen. Diese kann vorteilhaft sein, wenn das gesinterte poröse Endprodukt diese Eigenschaft einer Porengrößenverteilung mit einem abschnittsweisen und/oder lagenweisen Gradienten aufweisen soll, um zum Beispiel die Verweilzeit von Edukten und Produkten bei chemischen Reaktionen gezielt zu steuern.

Zweckmäßig kann es erforderlich sein, bei einem erfindungsgemäßen Herstellungsverfahren beim Mischen des pulverförmigen Trägermaterials mit dem beschichteten Spacermaterial zumindest einen Zusatzstoff, vorzugsweise zumindest einen oberflächenaktiven Zusatzstoff, der Formmasse zuzusetzen.

Beispielsweise können oberflächenaktive Substanzen in einem kleinen Volumenanteil von 0,1 bis 2%, bevorzugt von 0,5%, der Formmasse zugesetzt werden. Oberflächenaktive Substanzen setzen die Grenzflächenspannung zweier Phasen - hier die Grenzflächenspannung zwischen dem Trägermaterial und dem beschichteten Spacermaterial herab - und bewirken, dass diese beiden Materialien fein vermengt bleiben und das Trägermaterial leichter deagglomeriert werden kann.

Die eingangs genannten Aufgaben werden im Rahmen der Erfindung auch von einem porösen Formkörper mit einer definierten Porengrößenverteilung gelöst, wobei der poröse Formkörper zumindest einen Abschnitt, vorzugsweise zumindest eine Schicht, mit einer im Vergleich zum daran angrenzenden Material geänderten Porosität aufweist.

Ein nach dem erfindungsgemäßen Verfahren hergestellter poröser Formkörper kann vorteilhaft lokale Bereiche in seiner Struktur aufweisen, die abschnittsweise - oder vorzugsweise schichtweise - eine geänderte Porosität aufweist. Unter dem Begriff der geänderten Porosität wird im Rahmen der Erfindung ein relativer Porositätsunterschied eines Bereiches oder Abschnitts des Formkörpers in Bezug zu einem anderen Bereich oder Abschnitt desselben Formkörpers verstanden. Beispielsweise kann ein erster Abschnitt oder eine erste Schicht des Formkörpers eine erste Porosität aufweisen, während ein daran angrenzender zweiter Abschnitt oder eine zweite Schicht des Formkörpers eine zweite Porosität aufweist, welche unterschiedlich von der ersten Porosität ist. Ein Abschnitt mit einer ersten Porosität bzw. einer ersten Porengrößenverteilung kann beispielsweise einen größeren oder einen kleineren Porengrad aufweisen als ein anderer, zweiter Abschnitt mit einer zweiten Porosität bzw. einer zweiten Porengrößenverteilung. Die Grenzen zwischen den Bereichen oder Abschnitten mit geänderter bzw. unterschiedlicher Porosität können je nach Einsatzzweck des porösen Formkörpers beispielsweise präzise abgegrenzt sein. Ebenso ist es im Rahmen der Erfindung möglich, einen Übergangsbereich mit einem Gradienten der Porengrößenverteilung vorzusehen zwischen einem ersten und einem zweiten Abschnitt eines Formkörpers, wenn der erste Abschnitt eine erste Porosität bzw. eine erste Porengrößenverteilung beispielsweise mit einem größeren Porengrad aufweist, als der daran angrenzende zweite Abschnitt desselben Formkörpers mit einer zweiten Porengrößenverteilung mit geringerem Porengrad.

Vorteilhaft können solche Abschnitte oder Schichten mit lokal unterschiedlicher bzw. geänderter Porosität beispielsweise in einem Spritzgussverfahren durch den Einsatz einer Spritzgussvorrichtung mit mehr als einer Plastifiziereinheit erzeugt werden - dem sogenannten Mehrkomponentenspritzgießen. Mehrere Plastifiziereinheiten können dabei mit jeweils unterschiedlichen Einsatzmaterialien befüllt werden, welche dann durch sequenzielles Einspritzen in die Kavität der Spritzgussvorrichtung dosiert zugeführt werden können. Durch sequentielle Freigabe der Kavität im Spritzgießwerkzeug können die Bereiche mit unterschiedlichen Materialeigenschaften genau definiert werden. Somit können Spritzlinge bzw. Grünlinge und in weiterer Folge poröse Formkörper mit lokal oder schichtweise unterschiedlicher Porosität hergestellt werden.

Besonders vorteilhaft kann ein erfindungsgemäß hergestellter poröser Formkörper als GasDiffusion-Layer eines Elektrolyseurs oder einer Brennstoffzelle verwendet werden.

Vorteilhaft kann ein poröser Formkörper gemäß der Erfindung bei sogenannten Membran-Elektrode-Assemblies (MEA) von Elektrolyseuren oder Brennstoffzellen, die aus porösen Schichten bestehen und an denen Reaktionsort und -geschwindigkeit, Edukt-/Produktfluss und -abtransport durch Porosität gezielt beeinflusst werden müssen, verwendet werden. Zusätzlich ist es im Falle von Elektrolyseuren vorteilhaft, wenn durch schichtweise oder gradiert variierende Porosität des Formkörpers ein guter Kompromiss erzielt werden kann zwischen einerseits einem möglichst geringen Druckverlust beim Durchströmen der porösen Schicht und andererseits einer gewünschten Vermeidung der Diffusion von Sauerstoff auf die Wasserstoffseite. Durch die Vermeidung der Diffusion von Sauerstoff auf die Wasserstoffseite wird die Betriebssicherheit von Elektrolyseuren vorteilhaft erhöht.

Der Formkörper kann dabei zumindest ein Sintermaterial, welches aus der Gruppe: Titan, Titanlegierungen, säurebeständige Oxidkeramik, Aluminiumoxid und/oder Zirkonoxid ausgewählt ist, umfassen. Derartige Sintermaterialien werden bei vergleichsweise hohen Temperaturen beispielsweise von 1400°C bis 1700°C gesintert.

Weitere vorteilhafte Einzelheiten, Merkmale und Vorteile der Erfindung ergeben sich aus der nachfolgenden Erläuterung von in den Zeichnungen schematisch dargestellten Ausführungsbeispielen. In den Zeichnungen zeigen:
- - **Fig. 1**: in einem schematischen Verfahrensfließbild ein erfindungsgemäßes Verfahren zur Herstellung eines porösen Formkörpers;
- - **Fig. 2**: in den Abbildungen Fig. 2A bis 2C einzelne Einsatzmaterialien, in Fig. 2D eine Form-masse als erstes Mischungsprodukt, in Fig. 2E einen Grünling, sowie in Fig. 2F einen fertig gesinterten porösen Formkörper;
- - **Fig. 3**: einen Temperaturverlauf einer ersten Verfahrensvariante gemäß der Erfindung;
- - **Fig. 4**: einen Temperaturverlauf einer zweiten Verfahrensvariante gemäß der Erfindung, wobei ein kombiniertes thermisches und chemisches Entfernen des Bindermaterials vorgesehen ist; sowie
- - **Fig. 5**: einen Temperaturverlauf einer dritten Verfahrensvariante gemäß der Erfindung, wobei ein kombiniertes thermisches und chemisches Entfernen des Spacermaterials vorgesehen ist.

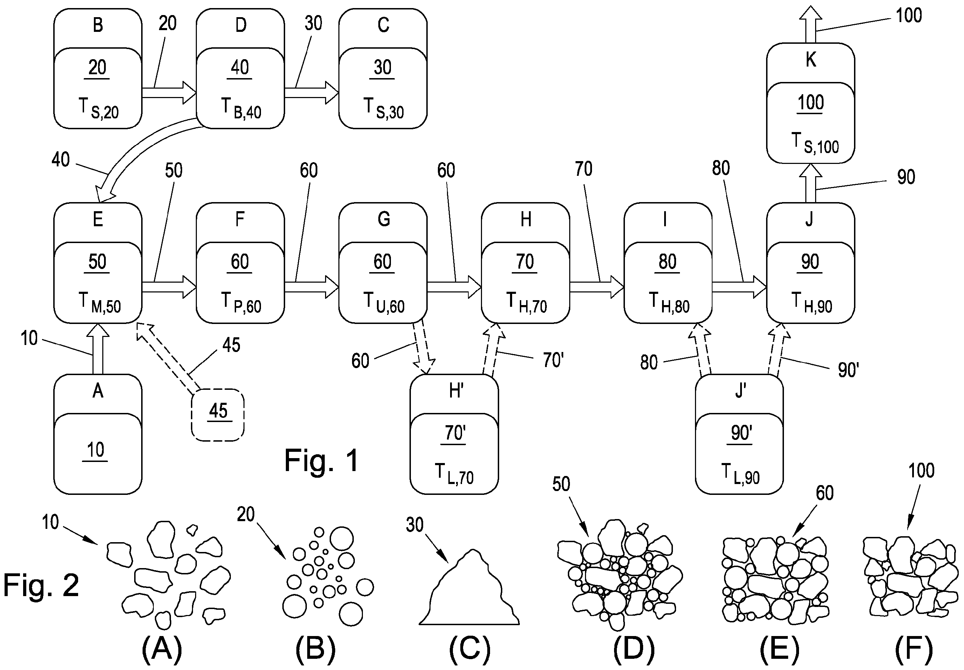

**Fig.1** in einem schematischen Verfahrensfließbild ein erfindungsgemäßes Verfahren mit den folgenden Verfahrensschritten -A- bis -K-:
In Verfahrensschritt -A- wird ein pulverförmiges Trägermaterial 10 bereitgestellt, welches zumindest ein Metallpulver und/oder zumindest ein Keramikpulver oder Mischungen daraus umfasst.

In Verfahrensschritt -B- wird ein Spacermaterial 20 mit einer Schmelztemperatur T_{S,20} des Spacermaterials 20 bereitgestellt. Beispielsweise wird als Spacermaterial 20 ein Kunststoffmaterial verwendet, welches eine Schmelztemperatur T_{S,20} von 200°C aufweist.

In Verfahrensschritt -C- wird ein niedrigschmelzendes Bindermaterial 30 bereitgestellt, wobei die Schmelztemperatur T_{S,30} des Bindermaterials 30 unterhalb der Schmelztemperatur T_{S,20} des Spacermaterials 20 ausgewählt wird. Beispielsweise wird als Bindermaterial 30 ein Wachs verwendet, welches eine Schmelztemperatur T_{S,30} von 70°C aufweist.

In Verfahrensschritt -D- wird das Spacermaterial 20 mit dem niedrigschmelzenden Bindermaterial 30 beschichtet, wobei ein beschichtetes Spacermaterial 40 erhalten wird. Die Beschichtung erfolgt dabei zweckmäßig bei einer Beschichtungstemperatur T_{B,40} oberhalb der Schmelztemperatur T_{S,30} des Bindermaterials 30 - hier im Beispiel also bei einer Beschichtungstemperatur T_{B,40} knapp über 70°C, beispielsweise bei 80°C, und deutlich unterhalb der Schmelztemperatur T_{S,20} des Spacermaterials 20 von 200°C. Als Mischaggregat für das Beschichten wird hier beispielsweise ein Wirbelschicht-Sprühcoater verwendet. Das beschichtete Spacermaterial 40 beinhaltet beispielsweise einen Volumenanteil des Spacermaterials 20 von 80% sowie einen Volumenanteil des Bindermaterials 30 von 20%.

In Verfahrensschritt -E- erfolgt das Mischen des pulverförmigen Trägermaterials 10 mit dem bereits beschichteten Spacermaterial 40 unter Bildung einer Formmasse 50 in einem Mischaggregat bei einer Mischungstemperatur T_{M,50}. Die Mischungstemperatur T_{M,50} für das Mischen des Trägermaterials 10 mit dem beschichteten Spacermaterial 40 zur Formmasse 50 wird hier unterhalb der Schmelztemperatur T_{S,30} des Bindermaterials 30 ausgewählt und beträgt beispielsweise 50°C. Damit wird verhindert, dass die hier beispielhaft gewählte Wachs-Beschichtung des beschichteten Spacermaterials 40 zu schmelzen beginnt und das beschichtete Spacermaterial agglomeriert.

Optional kann die bereits angemischte Formmasse 50 auch noch bei einer erhöhten Mischungstemperatur zu einem formbaren Einsatzmaterial beispielsweise zum Einsatz in einem Spritzgussverfahren weiter geformt werden. Dabei kann die Mischungstemperatur auch oberhalb der Schmelztemperatur T_{S,30} des Bindermaterials 30 sowie unterhalb der Schmelztemperatur T_{S,20} des Spacermaterials 20 ausgewählt werden.

Außerdem kann als Option beim Mischen des pulverförmigen Trägermaterials 10 mit dem beschichteten Spacermaterial 40 zumindest ein Zusatzstoff 45, vorzugsweise ein oberflächenaktiver Zusatzstoff, der Formmasse 50 zugesetzt werden. Diese Option ist in Fig. 1 durch einen strichlierten Pfeil 45 veranschaulicht.

In Verfahrensschritt -F- erfolgt das formgebende Herstellen eines Grünlings 60 aus der Formmasse 50 bei einer Plastifizierungstemperatur T_{P,60}, die unterhalb der Schmelztemperatur T_{S,20} des Spacermaterials 20 gewählt wird. Für die hier beispielhaft genannten Ausgangsmaterialien wird beispielsweise eine Plastifizierungstemperatur T_{P,60} von 150°C gewählt.

In Verfahrensschritt -G- erfolgt danach das Abkühlen des Grünlings 60 auf Umgebungstemperatur T_{U,60} bzw. Raumtemperatur.

In Verfahrensschritt -H- wird das Bindermaterial 30 des Grünlings 60 bei einer ersten Haltetemperatur T_{H,70} thermisch entfernt. Dazu wird der Grünling 60 beispielsweise in einem Entbinderungsofen chargiert, wobei ein Grünling 70 mit zumindest teilweise entferntem Bindermaterial 30 erhalten wird. Die erste Haltetemperatur T_{H,70} wird dazu unterhalb der Schmelztemperatur T_{S,20} des Spacermaterials 20 sowie oberhalb der Schmelztemperatur T_{S,30} des Bindermaterials 30 ausgewählt. Im hier geschilderten Beispiel wird die erste Haltetemperatur T_{H,70} beispielsweise bei 190°C gewählt.

Als Option kann es erforderlich sein, zusätzlich vor dem thermischen Entbindern auch noch ein chemisches Entfernen des Bindermaterials durchzuführen. Dazu wird nach dem Abkühlen des Grünlings 60 (gemäß Verfahrensschritt -G-) und vor dem thermischen Entfernen des Bindermaterials 30 (gemäß Verfahrensschritt -H-) in einem weiteren, optionalen Verfahrensschritt -H'- ein chemisches Entfernen des Bindermaterials 30 unter Einsatz zumindest eines Lösungsmittels oder Lösungsmittelgemisches durchgeführt. Der Grünling 60 wird dazu bei einer Lösungsmitteltemperatur T_{L,70} von 10°C bis 80°C zumindest eine Stunde lang in einem Lösungsmittelbad eingetaucht (eluiert) und anschließend getrocknet, bevor dieser als Grünling 70' mit bereits chemisch entfernten Bindermaterial gemäß Verfahrensschritt -H- thermisch entbindert wird. Im hier genannten Beispiel erfolgt das Lösungsmittelentbindern beispielsweise bei einer Lösungsmitteltemperatur T_{L,70} von 25°C während einer Dauer von 6 Stunden, bevor der Grünling 70' anschließend während einer Stunde bei 25°C getrocknet wird. Zur Kennzeichnung des optionalen Verfahrensschritts -H'- sind in Fig. 1 der Grünling 60, der dem Lösemittelbad zugeführt wird, sowie der chemisch entbinderte Grünling 70', der anschließend in Verfahrensschritt -H- noch thermisch entbindert wird, jeweils durch strichlierte Pfeile symbolisiert.

In Verfahrensschritt -I- erfolgt das Ansintern des zumindest teilweise entbinderten Grünlings 70 bei einer zweiten Haltetemperatur T_{H,80}, wobei die zweite Haltetemperatur T_{H,80} oberhalb der Schmelztemperatur T_{S} des Spacermaterials 20 sowie oberhalb der ersten Haltetemperatur T_{H,70} ausgewählt wird. Dabei wird ein angesinterter Grünling 80 erhalten. Im hier geschilderten Beispiel wird für das Ansintern die zweite Haltetemperatur T_{H,80} beispielsweise bei 500°C gewählt.

In Verfahrensschritt -J- erfolgt dann das thermische Entfernen des Spacermaterials 20 aus dem angesinterten Grünling 80 bei einer dritten Haltetemperatur T_{H,90}, wobei die dritte Haltetemperatur T_{H,90} oberhalb der zweiten Haltetemperatur T_{H,80} ausgewählt wird und hier beispielsweise bei 650°C gewählt ist. Dabei wird ein Zwischenprodukt 90 mit zumindest teilweise entferntem Spacermaterial 20 erhalten.

Gemäß einer weiteren Option des erfindungsgemäßen Verfahrens kann es erforderlich sein, dass nach dem Ansintern des Grünlings 80 (gemäß Verfahrensschritt -I-) und vor dem thermischen Entfernen des Spacermaterials 20 (gemäß Verfahrensschritt -J-) in einem weiteren, optionalen Verfahrensschritt -J'- zusätzlich ein chemisches Entfernen des Spacermaterials 20 unter Einsatz zumindest eines Lösungsmittels oder Lösungsmittelgemisches erfolgt. Der angesinterte Grünling 80 kann dabei bei einer Lösungsmitteltemperatur T_{L,90} von 10°C bis 80°C zumindest eine Stunde lang in einem Lösungsmittelbad eluiert und anschließend getrocknet werden. Beispielsweise kann dieses chemische Entfernen des Spacermaterials im Lösungsmittelbad bei einer Lösungsmitteltemperatur T_{L,90} von 35°C während einer Dauer von 6 Stunden dauern. Anschließend wird das Zwischenprodukt 90', bei dem bereits das Spacermaterial durch Eluieren chemisch entfernt wurde, beispielsweise während einer Stunde bei 35°C getrocknet. Zur Kennzeichnung des optionalen Verfahrensschritts -J'- sind in Fig. 1 der dem Lösemittelbad zugeführte angesinterte Grünling 80 sowie das Zwischenprodukt 90', das anschließend in Verfahrensschritt -J- noch thermisch von verbleibendem Spacermaterial befreit wird, jeweils durch strichlierte Pfeile symbolisiert.

Im abschließenden Verfahrensschritt -K- erfolgt das Sintern des Zwischenprodukts 90 bei einer Sintertemperatur T_{S,100}, welche oberhalb der dritten Haltetemperatur T_{H,90} ausgewählt wird, zu einem porösen Formkörper 100 mit definierter Porengrößenverteilung. Vorteilhaft entspricht bei einem solchen Formkörper 100 die Porengrößenverteilung der Partikelgrößenverteilung des verwendeten Spacermaterials 20. Als Sintertemperatur T_{S,100} ist im hier genannten Beispiel beispielsweise eine Temperatur von rund 800°C unter Wasserstoffatmosphäre unter Einhaltung einer Haltezeit von einer Stunde für das Trägermaterial Kupfer ausgewählt.

Fig. 2 zeigt in Fig. 2A ein mögliches pulverförmiges Trägermaterial 10, das zum Einsatz im erfindungsgemäßen Verfahren geeignet ist, beispielsweise Kupfer.
Fig. 2B zeigt ein mögliches Spacermaterial 20, nämlich Polyamid oder Siliziumoxid.
Fig. 2C zeigt ein mögliches niedrigschmelzendes Bindermaterial 30, das zum Einsatz im erfindungsgemäßen Verfahren geeignet ist, beispielsweise eine Wachs-Stearinsäuremischung.
Fig. 2D zeigt eine Formmasse 50 als erstes Mischungsprodukt des pulverförmigen Trägermaterials 10 mit dem zuvor bereits hergestellten beschichteten Spacermaterials.

In Fig. 2E ist ein Grünling 60 veranschaulicht, wie dieser in einem formgebenden Schritt aus der Formmasse 50 geformt ist.
Fig. 2F zeigt einen fertig gesinterten porösen Formkörper 100.

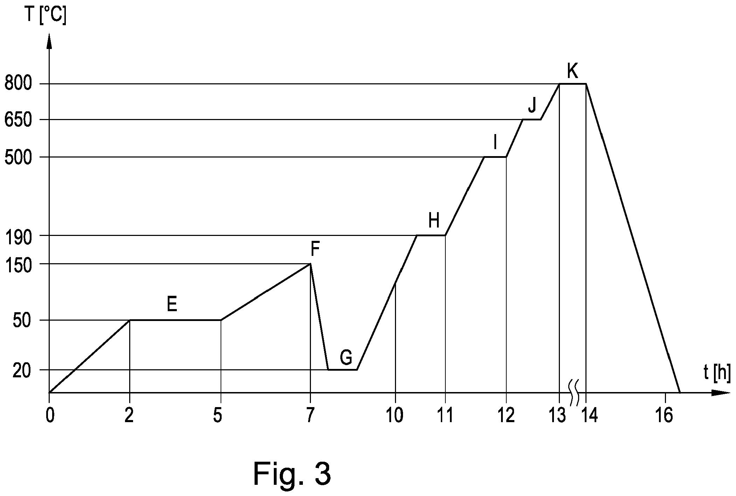

Fig. 3 zeigt einen Temperaturverlauf einer ersten Verfahrensvariante gemäß der Erfindung. In dem hier gezeigten Beispiel erfolgt gemäß Verfahrensschritt -E- das Mischen des pulverförmigen Trägermaterials 10 mit dem bereits beschichteten Spacermaterial 40 unter Bildung einer Formmasse 50 bei einer Mischungstemperatur T_{M,50} von 50°C während einer Dauer von rund 3 Stunden. In Verfahrensschritt -F- erfolgt das formgebende Herstellen eines Grünlings 60 aus der Formmasse 50 bei einer Plastifizierungstemperatur T_{P,60} von 150°C. Das Erwärmen der Formmasse 50 auf die gewählte Plastifizierungstemperatur T_{P,60} erfolgt hier schonend während zwei Stunden. In Verfahrensschritt -G- erfolgt danach das rasche Abkühlen des Grünlings 60 auf Umgebungstemperatur T_{U,60} hier beispielsweise von 20°C. In Verfahrensschritt -H- wird das Bindermaterial 30 des Grünlings 60 bei einer ersten Haltetemperatur T_{H,70} von 190°C thermisch entfernt. Dazu wird der Grünling 60 in einem Entbinderungsofen etwa zwei Stunden lang chargiert.

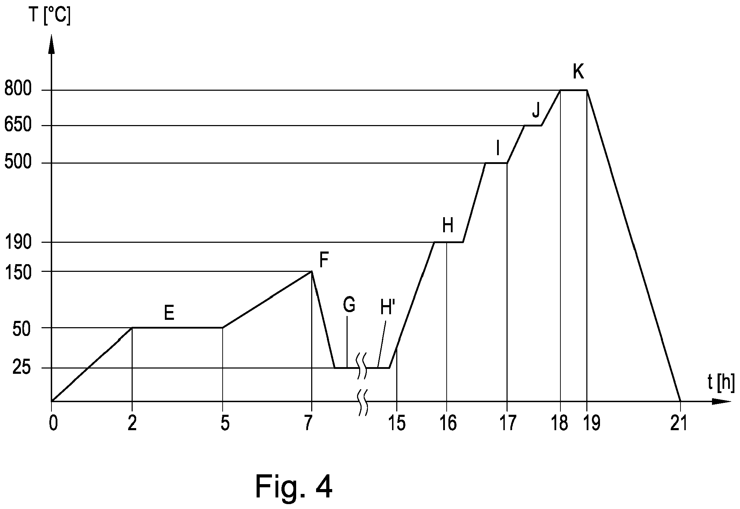

Wie in Fig. 4 veranschaulicht ist, kann es als Option erforderlich sein, zusätzlich vor dem thermischen Entbindern auch noch ein chemisches Entfernen des Bindermaterials durchzuführen. Dazu wird nach dem Abkühlen des Grünlings 60 (gemäß dem Verfahrensschritt -G-) und vor dem thermischen Entfernen des Bindermaterials 30 (gemäß Verfahrensschritt -H-) in einem weiteren, optionalen Verfahrensschritt -H'- ein chemisches Entfernen des Bindermaterials 30 unter Einsatz zumindest eines Lösungsmittels oder Lösungsmittelgemisches durchgeführt. Der Grünling 60 wird dazu hier - wie in Fig. 4 gezeigt ist - bei einer Lösungsmitteltemperatur T_{L,70} von 25°C sechs Stunden lang in einem Lösungsmittelbad eingetaucht (eluiert) und anschließend während einer Stunde bei 25°C getrocknet, bevor dieser als Grünling 70' mit bereits chemisch entfernten Bindermaterial gemäß Verfahrensschritt -H- thermisch entbindert wird.

Wie in den Abbildungen Fig. 3 sowie in Fig. 4 veranschaulicht ist, erfolgt anschließend gemäß Verfahrensschritt -I- das Ansintern des zumindest teilweise entbinderten Grünlings 70 bei einer zweiten Haltetemperatur T_{H,80}, die hier beispielsweise bei 500°C gewählt ist.

Im nachfolgenden Verfahrensschritt -J- erfolgt dann das thermische Entfernen des Spacermaterials 20 aus dem angesinterten Grünling 80 bei einer dritten Haltetemperatur T_{H,90}, die hier beispielsweise bei 650°C gewählt ist.

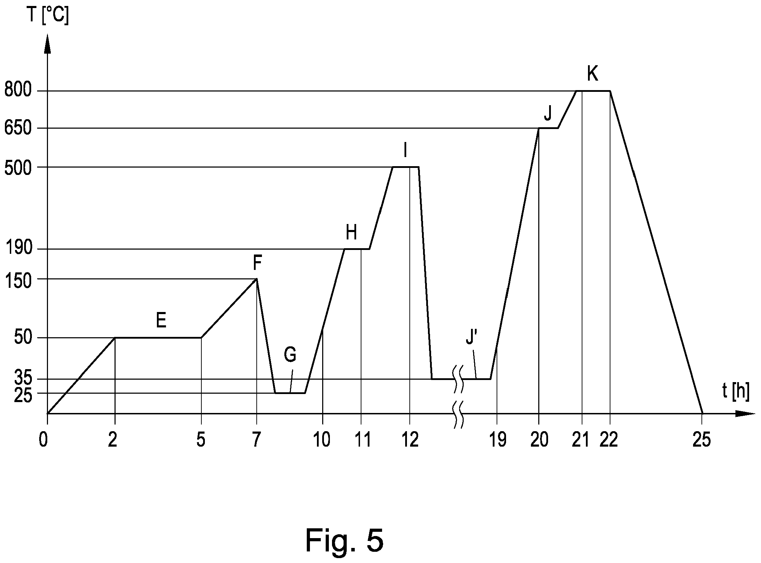

Wie in Fig. 5 veranschaulicht kann es gemäß einer weiteren Option des erfindungsgemäßen Verfahrens erforderlich sein, dass nach dem Ansintern des Grünlings 80 (gemäß Verfahrensschritt -I-) und vor dem thermischen Entfernen des Spacermaterials 20 (gemäß Verfahrensschritt -J-) in einem weiteren, optionalen Verfahrensschritt -J'- zusätzlich ein chemisches Entfernen des Spacermaterials 20 unter Einsatz zumindest eines Lösungsmittels oder Lösungsmittelgemisches erfolgt. Bei dem hier in Fig. 5 gezeigten chemischen Entfernen des Spacermaterials im Lösungsmittelbad wird eine Lösungsmitteltemperatur T_{L,90} von 35°C sowie eine Eluierungsdauer von 6 Stunden gewählt. Anschließend wird das Zwischenprodukt 90', bei dem bereits das Spacermaterial durch Eluieren chemisch entfernt wurde, beispielsweise während einer Stunde bei 35°C getrocknet.

Im abschließenden Verfahrensschritt -K- erfolgt das Sintern des Zwischenprodukts 90 bei einer Sintertemperatur T_{S,100}, die hier jeweils mit rund 800°C unter Wasserstoffatmosphäre unter Einhaltung einer Haltezeit von einer Stunde für das Trägermaterial Kupfer ausgewählt ist.

### LISTE DER BEZUGSZEICHEN

- 10: pulverförmiges Trägermaterial
- 20: Spacermaterial
- T_{S,20}: Schmelztemperatur des Spacermaterials 20
- 30: niedrigschmelzendes Bindermaterial
- T_{S,30}: Schmelztemperatur des Bindermaterials 30
- 40: beschichtetes Spacermaterial
- T_{L,40}: Beschichtungstemperatur
- 45: Zusatzstoff
- 50: Formmasse
- T_{M,50}: Mischungstemperatur
- 60: Grünling
- T_{P,60}: Plastifizierungstemperatur
- T_{U,60}: Umgebungstemperatur; z.B. Raumtemperatur
- 70: entbinderter Grünling
- T_{H,70}: erste Haltetemperatur
- 70': Grünling mit chemisch entferntem Bindermaterial
- T_{L,70}: Lösungsmitteltemperatur beim chemischen Entfernen des Bindermaterials
- 80: angesinterter Grünling
- T_{H,80}: zweite Haltetemperatur
- 90: Zwischenprodukt
- T_{H,90}: dritte Haltetemperatur
- 90': Zwischenprodukt mit chemisch entferntem Spacermaterial
- T_{L,90}: Lösungsmitteltemperatur beim chemischen Entfernen des Spacermaterials
- 100: poröser Formkörper
- T_{S,100}: Sintertemperatur

## Patentansprüche

1. Verfahren zur Herstellung eines porösen Formkörpers (100), das zumindest die folgenden Verfahrensschritte umfasst:
-A- Bereitstellen eines pulverförmigen Trägermaterials (10), welches zumindest ein Metallpulver und/oder zumindest ein Keramikpulver oder Mischungen daraus umfasst;
-B- Bereitstellen eines Spacermaterials (20) mit einer Schmelztemperatur (T_{S,20}) des Spacermaterials (20);
-C- Bereitstellen eines niedrigschmelzenden Bindermaterials (30), wobei die Schmelztemperatur (T_{S,30}) des Bindermaterials (30) unterhalb der Schmelztemperatur (T_{S,20}) des Spacermaterials (20) ausgewählt wird;
-D- Beschichten des Spacermaterials (20) mit dem niedrigschmelzenden Bindermaterial (30) unter Bildung eines beschichteten Spacermaterials (40);
-E- Mischen des pulverförmigen Trägermaterials (10) mit dem beschichteten Spacermaterial (40) unter Bildung einer Formmasse (50) in einem Mischaggregat bei einer Mischungstemperatur (T_{M,50});
-F- Formgebendes Herstellen eines Grünlings (60) aus der Formmasse (50) bei einer Plastifizierungstemperatur (T_{P,60}), die unterhalb der Schmelztemperatur (T_{S,20}) des Spacermaterials (20) gewählt wird;
-G- Abkühlen des Grünlings (60) auf Umgebungstemperatur (T_{U,60});
-H- Entfernen des Bindermaterials (30) des Grünlings (60) bei einer ersten Haltetemperatur (T_{H,70}), wobei die erste Haltetemperatur (T_{H,70}) unterhalb der Schmelztemperatur (T_{S,20}) des Spacermaterials (20) sowie oberhalb der Schmelztemperatur (T_{S,30}) des Bindermaterials (30) ausgewählt wird, wobei ein Grünling (70) mit zumindest teilweise entferntem Bindermaterial (30) erhalten wird;
-I- Ansintern des entbinderten Grünlings (70) bei einer zweiten Haltetemperatur (T_{H,80}), wobei die zweite Haltetemperatur (T_{H,80}) oberhalb der Schmelztemperatur (Ts) des Spacermaterials (20) sowie oberhalb der ersten Haltetemperatur (T_{H,70}) ausgewählt wird, wobei ein angesinterter Grünling (80) erhalten wird;
-J- Entfernen des Spacermaterials (20) aus dem angesinterten Grünling (80) bei einer dritten Haltetemperatur (T_{H,90}), wobei die dritte Haltetemperatur (T_{H,90}) oberhalb der zweiten Haltetemperatur (T_{H,80}) ausgewählt wird, wobei ein Zwischenprodukt (90) mit zumindest teilweise entferntem Spacermaterial (20) erhalten wird;
-K- Sintern des Zwischenprodukts (90) bei einer Sintertemperatur (T_{S,100}), welche oberhalb der dritten Haltetemperatur (T_{H,90}) ausgewählt wird, zu einem porösen Formkörper (100) mit definierter Porengrößenverteilung, welche der Partikelgrößenverteilung des Spacermaterials (20) entspricht.

2. Verfahren nach Anspruch 1, **dadurch gekennzeichnet, dass** nach dem Abkühlen des Grünlings (60) (Verfahrensschritt -G-) und vor dem thermischen Entfernen des Bindermaterials (30) (Verfahrensschritt -H-) in einem weiteren Verfahrensschritt (Verfahrensschritt -H'-) ein chemisches Entfernen des Bindermaterials (30) unter Einsatz zumindest eines Lösungsmittels oder Lösungsmittelgemisches erfolgt, wobei der Grünling (60) bei einer Lösungsmitteltemperatur (T_{L,70}) von 10°C bis 80°C, vorzugsweise von 20° bis 70°, besonders bevorzugt von 25°C bis 60°C, zumindest eine Stunde lang in einem Lösungsmittelbad eingetaucht und anschließend getrocknet wird.

3. Verfahren nach Anspruch 1 oder 2, **dadurch gekennzeichnet, dass** nach dem Ansintern des Grünlings (80) (Verfahrensschritt -I-) und vor dem thermischen Entfernen des Spacermaterials (20) (Verfahrensschritt -J-) in einem weiteren Verfahrensschritt (Verfahrensschritt -J'-) ein chemisches Entfernen des Spacermaterials (20) unter Einsatz zumindest eines Lösungsmittels oder Lösungsmittelgemisches erfolgt, wobei der angesinterte Grünling (80) bei einer Lösungsmitteltemperatur (T_{L,90}) von 10°C bis 80°C, vorzugsweise von 20° bis 70°, besonders bevorzugt von 25°C bis 60°C, zumindest eine Stunde lang in einem Lösungsmittelbad eingetaucht und anschließend getrocknet wird.

4. Verfahren nach einem der Ansprüche 1 bis 3, **dadurch gekennzeichnet, dass** das pulverförmige Trägermaterial (10) Partikel mit einer Korngröße von 0,1 µm bis 300 µm, bevorzugt von 1 µm bis 150 µm, besonders bevorzugt von 5 µm bis 50 µm, enthält, wobei die Partikel in einer definierten Korngrößenverteilung vorliegen.

5. Verfahren nach einem der Ansprüche 1 bis 4, **dadurch gekennzeichnet, dass** das Spacermaterial (20) einen pulverförmigen Kunststoff oder ein Kunststoffgemisch enthält, wobei die Schmelztemperatur (T_{S,20}) des Spacermaterials (20) von 100°C bis 350°C, bevorzugt von 150°C bis 250°C, beträgt.

6. Verfahren nach einem der Ansprüche 1 bis 4, **dadurch gekennzeichnet, dass** das Spacermaterial (20) eine pulverförmige Oxidkeramik oder ein Oxidkeramikgemisch enthält.

7. Verfahren nach einem der Ansprüche 1 bis 6, **dadurch gekennzeichnet, dass** das Bindermaterial (30) ein niedrigschmelzendes Wachs und/oder eine niedrigschmelzende organische Verbindung oder Mischungen daraus enthält, wobei die Schmelztemperatur (T_{S,30}) des Bindermaterials (30) von 30°C bis 100°C, bevorzugt von 50°C bis 80°C, beträgt.

8. Verfahren nach einem der Ansprüche 1 bis 7, **dadurch gekennzeichnet, dass** die Mischungstemperatur (T_{M,50}) für das Mischen des pulverförmigen Trägermaterials (10) mit dem beschichteten Spacermaterial (40) zu einer Formmasse (50) unterhalb der Schmelztemperatur (T_{S,30}) des Bindermaterials (30) ausgewählt wird.

9. Verfahren nach einem der Ansprüche 1 bis 8, **dadurch gekennzeichnet, dass** die Mischungstemperatur (T_{M,50}) für das Weiterformen der Formmasse (50) zu einem formbaren Einsatzmaterial oberhalb der Schmelztemperatur (T_{S,30}) des Bindermaterials (30) sowie unterhalb der Schmelztemperatur (T_{S,20}) des Spacermaterials (20) ausgewählt wird.

10. Verfahren nach Anspruch 9, **dadurch gekennzeichnet, dass** das formgebende Herstellen eines Grünlings (60) aus der Formmasse (50) mit einem Gussverfahren, vorzugsweise mit einem Spritzgussverfahren, besonders bevorzugt mit einem Mehrkomponenten-Spritzgussverfahren, erfolgt.

11. Verfahren nach einem der Ansprüche 1 bis 10, **dadurch gekennzeichnet, dass** für das Mischen des pulverförmigen Trägermaterials (10) mit dem beschichteten Spacermaterial (40) ein homogen mischendes Mischaggregat ausgewählt wird, mit dem eine homogene Formmasse (50) zur Herstellung eines Grünlings (60) mit einer homogenen Porengrößenverteilung erhalten wird.

12. Verfahren nach einem der Ansprüche 1 bis 11, **dadurch gekennzeichnet, dass** für das Mischen des pulverförmigen Trägermaterials (10) mit dem beschichteten Spacermaterial (40) ein separierend wirkendes Trennaggregat ausgewählt wird, mit dem eine inhomogene Formmasse (50) zur Herstellung eines Grünlings (60) mit einer lokal unterschiedlichen Porengrößenverteilung erhalten wird.

13. Verfahren nach einem der Ansprüche 1 bis 12, **dadurch gekennzeichnet, dass** beim Mischen des pulverförmigen Trägermaterials (10) mit dem beschichteten Spacermaterial (40) zumindest ein Zusatzstoff (45), vorzugsweise ein oberflächenaktiver Zusatzstoff, der Formmasse (50) zugesetzt wird.

14. Poröser Formkörper (100) mit einer definierten Porengrößenverteilung, **dadurch gekennzeichnet, dass** der poröse Formkörper (100) zumindest einen Abschnitt, vorzugsweise zumindest eine Schicht, mit einer im Vergleich zum daran angrenzenden Material geänderten Porosität aufweist.

15. Verwendung eines porösen Formkörpers (100) nach Anspruch 14 als Gas-Diffusion-Layer eines Elektrolyseurs oder einer Brennstoffzelle.
